# FASCICULE DE BREVET EUROPEEN

(11) **EP 0 727 175 B1**
(45) Date de publication et mention de la délivrance du brevet: **28.10.1998**
(21) Numéro de dépôt: 96410010.1
(22) Date de dépôt: 07.02.1996
(51) Int. Cl.: A47L 13/52, A01B 1/02, A01B 1/22, E01H 5/02

(54) **Outil de ramassage réversible**
Umkehrbares Sammelgerät
Reversible collecting device

(30) Priorité: 15.02.1995 FR 9501942
(43) Date de publication de la demande: 21.08.1996
(73) Titulaire: LEBORGNE, 73110 Arvillard (FR)
(72) Inventeur: Chaney, Jean-François, F-38580 La Chapelle du Bard (FR)
(74) Mandataire: Hecké, Gérard

(56) Documents cités:
- DE-A- 3 125 914

## Description

L'invention est relative à un outil de ramassage, comportant une pelle de travail associée à un manche de préhension, le corps de ramassage de la pelle étant équipé de moyens de fixation de l'extrémité du manche (voir le document DE-A-3125914).

Il existe une multitude d'outils de ramassage pour diverses applications dans le domaine du bâtiment, du jardinage, et du déneigement. A chaque application correspond un outil spécifique. On utilise ainsi une pelle à neige ou un grattoir pour déneiger la cour de la maison en cas de chute de neige. Pour le jardinage, et notamment pour l'entretien du gazon, on utilise le rateau, la bêche, la fourche, le croc, et le balai à gazon. Il en résulte un problème de stockage de tous ces outils, aussi bien dans les magasins de vente, et dans les locaux des utilisateurs.

L'objet de l'invention consiste à réaliser un outil de ramassage universel, facilement adaptable à une application donnée.

L'outil de ramassage selon l'invention est caractérisé en ce que:
- le corps comporte deux parties adjacentes disposées en V selon un premier angle obtus,
- la première partie possède un premier tube de logement du manche, et une arête discontinue,
- la deuxième partie est dotée d'un deuxième tube de logement du manche, et une arête rectiligne continue,
- ladite pelle étant réversible de manière à rendre alternativement active la première partie ou la deuxième partie, respectivement lorsque le manche est emboîté dans le deuxième tube ou le premier tube.

Selon une caractéristique de l'invention, l'arête discontinue de la première partie présente un contour en dents de scie.

Selon un mode réalisation préférentiel, les deux tubes s'étendent le long de deux axes décalés angulairement par un deuxième angle obtus, lequel est supérieur audit premier angle entre les deux parties.

Une ouverture intermédiaire est agencée dans la zone médiane de la pelle pour assurer la communication entre les deux tubes.

La fixation du manche dans l'un des deux tubes s'effectue par l'intermédiaire de moyens de serrage, du type à vis ou à encliquetage.

Le corps de la pelle peut être réalisé en métal ou en plastique.

D'autres avantages et caractéristiques ressortiront plus clairement de la description qui va suivre d'un mode de réalisation de l'invention, donné à titre d'exemple non limitatif, et représenté aux dessins annexés, dans lesquels:
- la figure 1 est une vue en élévation de l'outil à pelle de ramassage selon l'invention;
- la figure 2 montre une vue en plan de l'outil de la figure 1;
- la figure 3 représente une vue identique de la figure 2, après retournement de la pelle;
- la figure 4 est une vue en coupe , à échelle agrandie selon la ligne 4-4 de la figure 2;

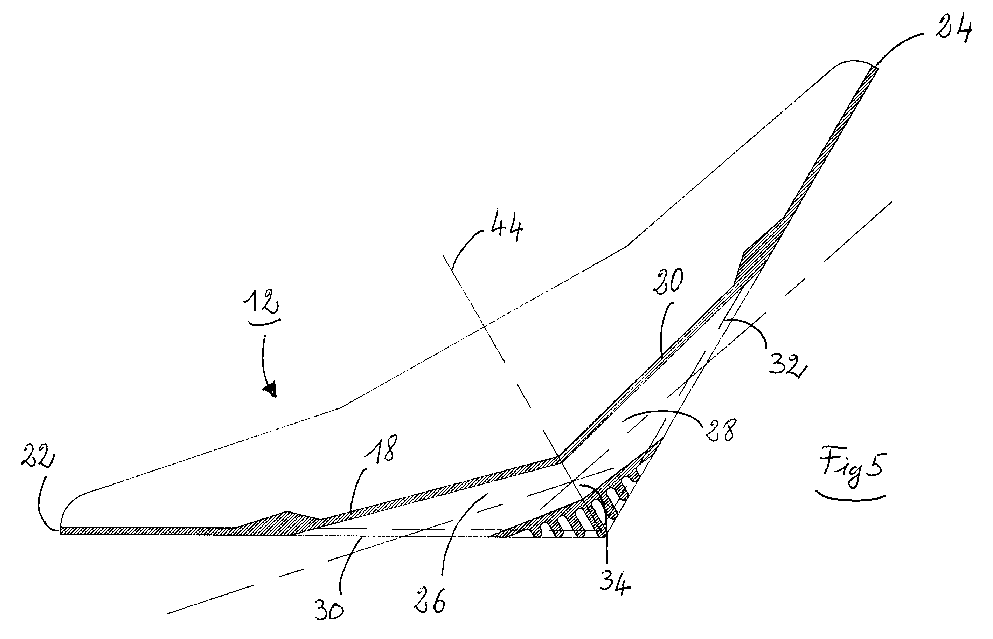

- la figure 5 montre une vue en coupe de la pelle, après enlèvement du manche.

Sur les figures, un outil de ramassage 10 universel pour le jardinage comporte une pelle 12 réversible associée à un manche 14 de préhension. Le corps 16 de la pelle 12 est conformé selon un V, en étant doté de deux parties 18,20 actives adjacentes faisant entre elles un premier angle obtus. La paroi interne de chaque partie 18,20 peut être plane ou incurvée, et sert de surface de réception pour les objets ou la matière à collecter.

L'extrémité libre de la première partie 18 est pourvue d'une arête discontinue 22, tandis que celle de la deuxième partie 20 est délimitée par une arête 24 rectiligne continue. Le profil de l'arête 22 discontinue présente un contour en dents de scie, mais il est clair que tout autre structure de profil peut être utilisé.

L'emboîtement du manche 14 sur la pelle réversible 12 peut s'effectuer au choix selon deux orientations différentes, en utilisant soit un premier tube de logement 26 solidaire de la première partie 18, soit un deuxième tube de logement 28 solidaire de la deuxième partie 20. Les deux tubes 26,28 de logement du manche 14 forment entre eux un deuxième angle obtus, et l'orifice d'entrée 30,32 de chaque tube 26,28 débouche dans la paroi externe inférieure de chaque partie 18,20. Le deuxième angle obtus entre les tubes 26,28 est supérieur au premier angle ménagé entre les parties 18,20.

Les deux tubes 26,28 communiquent entre eux par une ouverture 34 intermédiaire, laquelle se trouve dans la zone de pliage de deux parties 18,20 constitutives du corps 16.

A chaque tube 26,28 peut être associé un moyen de serrage 36,38 de l'extrémité du manche 14, ledit moyen pouvant être constitué par une anse de retenue 40 en forme de U coopérant avec un écrou 42 de fixation accessible depuis la paroi interne des parties 18,20. Il est clair que tout autre moyen de serrage peut être utilisé pour la fixation du manche, notamment des organes de verrouillage à encliquetage rapide.

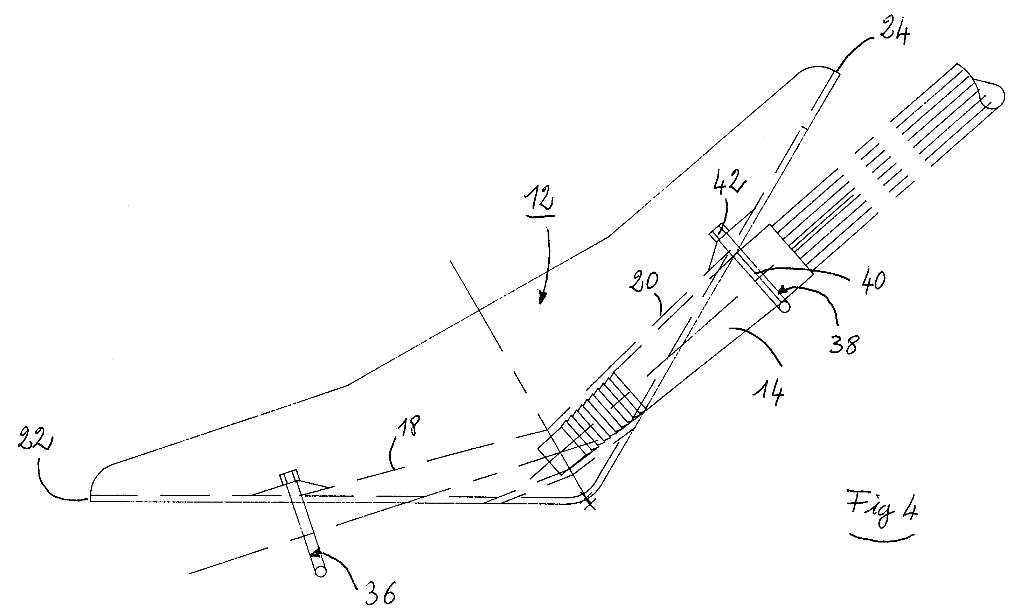

Sur la figure 4, la pelle 12 est équipée en permanence d'une paire de moyens de serrage 36,38, l'un étant actif du côté de l'introduction du manche 14, et l'autre étant inactif. Il est également possible de faire usage d'un seul moyen de serrage, agencé de manière démontable pour l'adapter du bon côté.

La pelle 12 peut être réalisée soit en un matériau métallique, notamment en aluminium ou en acier, soit en un matériau plastique moulé, notamment à base de polymère thermoplastique ou thermodurcissable.

Le fonctionnement et la mise en oeuvre de l'outil de ramassage 10 à pelle 12 réversible s'effectue de la manière suivante:

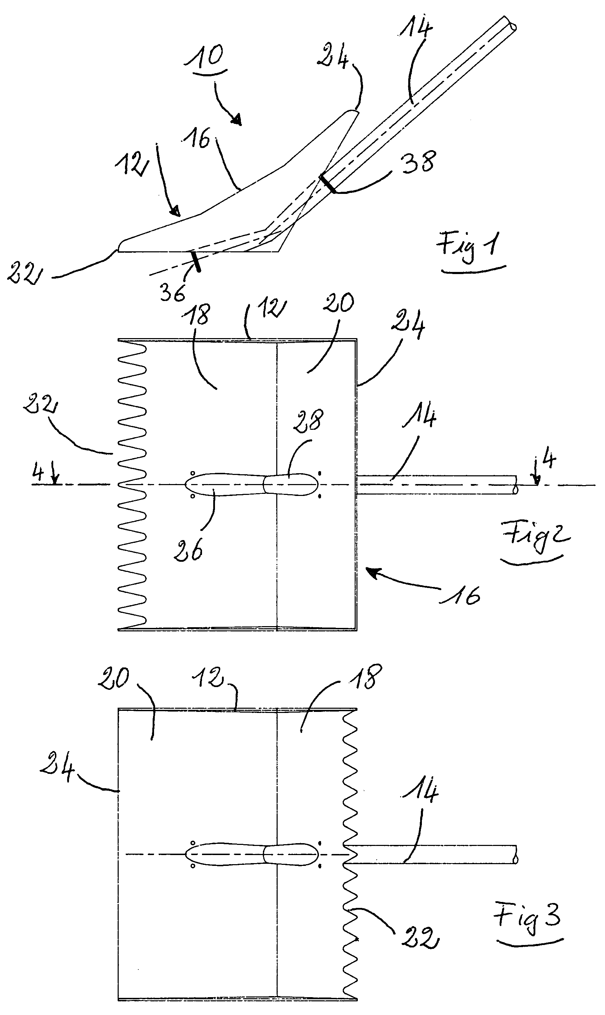

Lors de l'usage de la première partie 18 de la pelle 12 (figure 2), l'arête discontinue 22 est active, et disposée du côté antérieur frontal. Un tel montage nécessite l'emmanchement du manche 14 dans le deuxième tube 28 sous la deuxième partie 20. L'autre arête rectiligne 24 se trouve en position relevée inactive. L'emploi de l'arête discontinue 22 permet d'assurer une fonction double de ratissage et de ramassage, ce qui est particulièrement la collecte des feuilles et des branches sèches. La fonction de ratissage est opérée en retournant d'un demi-tour l'outil 10 de la figure 1 par rapport à l'axe longitudinal du manche 14. Dans cette position à l'envers, la première partie 18 est inclinée selon un angle aigu par rapport au sol, et le frottement de l'arête 22 en dents de scie permet de rassembler les feuilles lors des mouvements de traction exercées sur le manche 14. La fonction de ramassage des feuilles s'obtient en tenant l'outil 10 à l'endroit, tel que représenté dans la figure 1, en poussant simplement sur le manche 14. La première partie 18 s'étend tangentiellement par rapport au sol.

Lorsque l'utilisateur désire ramasser des particules plus fines, par exemple du sable ou de la neige, il suffit de desserrer l'anse 40 de serrage de la deuxième partie 20, et de retirer le manche 14 hors du deuxième tube 28. Le manche 14 se trouve désaccouplé de la pelle 12, et cette dernière est alors déplaçable vers la position de la figure 3, dans laquelle l'arête rectiligne 24 de la deuxième partie 20 est active et située du côté antérieur frontal. Le manche 14 est emboîté dans le premier tube 26, et l'arête discontinue 22 se trouve en position inactive relevée. La fixation du manche 14 s'effectue dans ce cas avec le premier moyen de serrage 36.

Le démontage des moyens de serrage 36,38 autorise une réversibilité rapide de la pelle 12 en fonction de l'usage recherché. Les deux parties 18,20 de la pelle 12 sont sensiblement symétriques par rapport au plan bissecteur de trace 44.

L'ouverture 34 médiane de communication entre les deux tubes 26,28 s'étend dans le plan bissecteur, et permet d'évacuer vers l'extérieur toute accumulation de terre ou de neige, lorsque le manche 14 est introduit dans l'un des tubes de logement.

## Revendications

1. Outil de ramassage, comportant une pelle (12) de travail associée à un manche de préhension (14) , le corps (16) de ramassage de la pelle (12) étant équipé de moyens de fixation de l'extrémité du manche (14), caractérisé en ce que:
- le corps (16) comporte deux parties (18,20) adjacentes disposées en V selon un premier angle obtus,
- la première partie (18) possède un premier tube (26) de logement du manche (14), et une arête (22) discontinue,
- la deuxième partie (20) est dotée d'un deuxième tube (28) de logement du manche (14), et une arête (24) rectiligne continue,
- ladite pelle (12) étant réversible de manière à rendre alternativement active la première partie (18) ou la deuxième partie (20), respectivement lorsque le manche (14) est emboîté dans le deuxième tube (28) ou le premier tube (26).

2. Outil de ramassage selon la revendication 1, caractérisé en ce que l'arête (22) discontinue de la première partie (18) présente un contour en dents de scie.

3. Outil de ramassage selon la revendication 1 ou 2, caractérisé en ce que la paroi interne de chaque partie (18,20) sert de surface de réception pour les objets ou la matière à collecter, et que l'orifice d'entrée (30,32) de chaque tube (26,28) débouche sous la paroi externe inférieure de chaque partie (18,20).

4. Outil de ramassage selon la revendication 3, caractérisé en ce que les deux tubes (26,28) s'étendent le long de deux axes décalés angulairement par un deuxième angle obtus, lequel est supérieur audit premier angle entre les deux parties (18,20).

5. Outil de ramassage selon la revendication 3 ou 4, caractérisé en ce que une ouverture (34) intermédiaire est agencée dans la zone médiane de la pelle (12) pour assurer la communication entre les deux tubes (26,28).

6. Outil de ramassage selon l'une des revendications 1 à 5, caractérisé en ce que chaque tube (26,28) coopère avec un moyen de serrage (36,38) du manche (14), et que les deux parties (18,20) de la pelle (12) sont sensiblement symétriques par rapport au plan bissecteur du corps(16).

7. Outil de ramassage selon l'une des revendications 1 à 6, caractérisé en ce que le corps (16) de la pelle (12) est réalisé en un matériau métallique, notamment en aluminium ou en acier.

8. Outil de ramassage selon l'une des revendications 1 à 6, caractérisé en ce que le corps (16) de la pelle (12) est réalisé en un matériau plastique moulé.

## Claims

1. A collecting device, comprising a working shovel (12) associated to a gripping shaft (14), the collecting body (16) of the shovel (12) being equipped with means for fixing the end of the shaft (14),
characterized in that:
- the body (16) comprises two adjacent parts (18, 20) arranged in a V-shape according to a first obtuse angle,
- the first part (18) has a first tube (26) for housing the shaft (14), and a discontinuous edge (22),
- the second part (20) is provided with a second tube (28) for housing the shaft (14), and a straight continuous edge (24),
- said shovel (12) being reversible in such a way as to make the first part (18) or the second part (20) alternatively active, respectively when the shaft (14) is engaged in the second tube (28) or in the first tube (26).

2. The collecting device according to claim 1, characterized in that the discontinuous edge (22) of the first part (18) presents a serrated outline.

3. The collecting device according to claim 1 or 2, characterized in that the internal wall of each part (18, 20) acts as reception surface for the objects or material to be collected, and that the insertion orifice (30, 32) of each tube (26, 28) gives out under the bottom outside wall of each part (18, 20).

4. The collecting device according to claim 3, characterized in that the two tubes (26, 28) extend along two axes angularly offset by a second obtuse angle which is greater than said first angle between the two parts (18, 20).

5. The collecting device according to claim 3 or 4, characterized in that an intermediate opening (34) is arranged in the middle zone of the shovel (12) for the purposes of communication between the two tubes (26, 28).

6. The collecting device according to any one of the claims 1 to 5, characterized in that each tube (26, 28) cooperates with a securing means (36, 38) for securing the shaft (14), and that the two parts (18, 20) of the shovel (12) are appreciably symmetrical with respect to the bisecting plane of the body (16).

7. The collecting device according to one of the claims 1 to 6, characterized in that the body (16) of the shovel (12) is made of a metallic material, notably aluminium or steel.

8. The collecting device according to one of the claims 1 to 6, characterized in that the body (16) of the shovel (12) is made of a moulded plastic material.

## Patentansprüche

1. Sammelgerät, mit einer Arbeitsschaufel (12), die mit einem Greifstiel (14) verbunden ist, wobei der Aufsammelkörper (16) der Schaufel (12) mit Befestigungsmitteln des Endes des Stiels (14) versehen ist, dadurch gekennzeichnet, dass :
der Körper (16) zwei nebeneinanderliegende Teile (18, 20) aufweist, die gemäss einem ersten stumpfen Winkel V-förmig angeordnet sind,
das erste Teil (18) ein erstes Rohr (26) besitzt, zur Unterbringung des Stiels (14), und eine unterbrochene Kante (22),
das zweite Teil (20) mit einem zweiten Rohr (28) versehen ist, zur Unterbringung des Stiels (14), und eine geradlinige durchlaufende Kante (24),
die genannte Schaufel (12) umkehrbar ist, damit wahlweise das erste Teil (18) oder das zweite Teil (20) tätig wird, bzw. wenn der Stiel (14) in dem zweiten Rohr (28) oder dem ersten Rohr (26) eingesteckt ist.

2. Sammelgerät, gemäss Anspruch 1, dadurch gekennzeichnet, dass die unterbrochene Kante (22) des ersten Teils (18) einen sägezahnförmigen Umriss aufweist.

3. Sammelgerät gemäss Anspruch 1 oder 2, dadurch gekennzeichnet, dass die innere Seite jedes Teils (18, 20) als Aufnahmefläche für die zu sammelnden Gegenstände oder Substanzen dient, und dass die Eingangsöffnung (30, 32) jedes Rohres (26, 28) unter der unteren äusseren Seite jedes Teils (18, 20) einmündet.

4. Sammelgerät gemäss Anspruch 3, dadurch gekennzeichnet, dass sich die beiden Rohre (26, 28) längs zwei Achsen erstrecken, die winklig durch einen zweiten stumpfen Winkel verschoben sind, der grösser ist als der erste Winkel zwischen den beiden Teilen (18, 20).

5. Sammelgerät gemäss Anspruch 3 oder 4, dadurch gekennzeichnet, dass eine zwischenliegende Öffnung (34) in dem mittleren Bereich der Schaufel (12) angeordnet ist, um die Verbindung zwischen den beiden Rohren (26, 28) zu gewährleisten.

6. Sammelgerät gemäss einem der Ansprüche 1 bis 5, dadurch gekennzeichnet, dass jedes Rohr (26, 28) mit einem Klemm-Mittel (36, 38) des Stiels (14) zusammenarbeitet, und dass die beiden Teile (18, 20) der Schaufel (12) annähernd symmetrisch gegenüber der halbierenden Ebene des Körpers (16) sind.

7. Sammelgerät gemäss einem der Ansprüche 1 bis 6, dadurch gekennzeichnet, dass der Körper (16) der Schaufel (12) aus einem Metall-Material hergestellt ist, insbesondere aus Aluminium oder Stahl.

8. Sammelgerät gemäss einem der Ansprüche 1 bis 6, dadurch gekennzeichnet, dass der Körper (16) der Schaufel (12) aus einem geformten Plastikmaterial hergestellt ist.
